# EUROPEAN PATENT APPLICATION

(11) **EP 2 367 226 A1**
(43) Date of publication of application: **21.09.2011**
(21) Application number: 09831603.7
(22) Date of filing: 02.10.2009
(51) Int. Cl.: H01M 6/08, H01M 4/06

(54) **ALKALINE DRY BATTERY**

(30) Priority: 12.12.2008 JP 2008317597
(71) Applicant: Panasonic Corporation, Kadoma-shi Osaka 571-8501 (JP)
(72) Inventor: KATO, Fumio, 1-61 Shirmoi 2-chome, Chuo-ku, Osaka-shi, Osaka 540-6207 (JP); NUNOME, Jun, 1-61 Shirmoi 2-chome, Chuo-ku, Osaka-shi, Osaka 540-6207 (JP); SHIMAMURA, Harunari, 1-61 Shirmoi 2-chome, Chuo-ku, Osaka-shi, Osaka 540-6207 (JP)
(74) Representative: Grünecker, Kinkeldey, Stockmair & Schwanhäusser Anwaltssozietät
(86) International application number: PCT/JP2009/005120
(87) International publication number: WO 2010/067494

(57) **Abstract**

An alkaline battery which is superior in high-rate discharge characteristics and in moderate- and low-rate discharge characteristics is provided.

An alkaline battery according to the present invention includes a closed-end cylindrical battery case 8 housing a hollow cylindrical positive electrode 2, a negative electrode 3 disposed in a hollow portion of the positive electrode 2, a separator 4 sandwiched between the positive electrode 2 and the negative electrode 3, and an alkaline electrolyte. The negative electrode 3 is made of a zinc porous body made of a collection of zinc fibers. The alkaline electrolyte includes 0.05% to 0.5% by mass, both inclusive, of at least one of polyacrylate and polyacrylic acid with respect to a mass of zinc in the negative electrode 3.

## Description

### TECHNICAL FIELD

The present disclosure relates to alkaline batteries.

### BACKGROUND ART

Alkaline batteries (alkaline-manganese dry batteries) using manganese dioxide for positive electrodes, zinc for negative electrodes, and alkaline aqueous solutions for electrolytes are highly versatile and can be manufactured at low cost, and therefore, are widely used as power sources for various types of equipment.

Some commercial alkaline batteries use, as a negative electrode, zinc gel obtained by dispersing zinc powder in a gelled alkaline electrolyte in which a gel component (e.g., polyacrylic acid) is dissolved. The negative electrode using zinc gel shows an insufficient degree of electrical connection/contact (i.e., a conductive network) between zinc powder particles, and has a low ion conductivity in the gelled alkaline electrolyte. Accordingly, the negative electrode using zinc gel tends to have a low zinc availability during high-rate discharge. To solve this problem, PATENT DOCUMENT 1 proposes a technique for increasing zinc availability by using a zinc porous body (e.g., wool) for a negative electrode to improve the conductive network, and in addition, for increasing the zinc availability by employing an alkaline electrolyte containing no gel components and having a high ion conductivity.

### CITATION LIST

### PATENT DOCUMENT

PATENT DOCUMENT I: Japanese Translation of PCT International Application No. 2008-518408

### SUMMARY OF THE INVENTION

### TECHNICAL PROBLEM

However, inventors of the present invention found that the use of a zinc porous body (e.g., wool) formed with a known technique proposed in PATENT DOCUMENT 1 is likely to cause a sharp voltage drop in the battery when a larger amount of the electrolyte is consumed in moderate- to low-rate discharge (i.e., at the end of discharge).

### SOLUTION TO THE PROBLEM

It is therefore an object of the present invention to provide an alkaline battery including a closed-end cylindrical battery case housing a hollow cylindrical positive electrode, a negative electrode disposed in a hollow portion of the positive electrode, a separator sandwiched between the positive electrode and the negative electrode, and an alkaline electrolyte. The negative electrode is made of a zinc porous body made of a collection of zinc fibers. The alkaline electrolyte includes 0.05% to 0.5% by mass, both inclusive, of at least one of polyacrylate and polyacrylic acid with respect to a mass of zinc in the negative electrode.

### ADVANTAGES OF THE INVENTION

The present invention can provide an alkaline battery superior in high-rate discharge characteristics and also in moderate- to low-rate discharge characteristics.

### BRIEF DESCRIPTION OF THE DRAWINGS

[FIG. 1] FIG. 1 is a front view partially illustrating a cross section of an alkaline battery according to an example.
[FIG. 2] FIG. 2 is a front view partially illustrating a cross section of an alkaline battery using a gelled negative electrode.
[FIG. 3] FIG. 3 is a table showing discharge characteristics of dry batteries of Example 1 and Comparative Examples 1 and 2.
[FIG. 4] FIG. 4 is a table showing discharge characteristics of dry batteries of Example 2 and Comparative Examples 2 and 3.
[FIG. 5] FIG. 5 is a table showing discharge characteristics of dry batteries of Example 3 and Comparative Example 2.
[FIG. 6] FIG. 6 is a table showing discharge characteristics of dry batteries of Example 4 and Comparative Example 2.
[FIG. 7] FIG. 7 is a table showing discharge characteristics of dry batteries of Example 5 and Comparative Example 2.
[FIG. 8] FIG. 8 is a table showing discharge characteristics of dry batteries of Example 6 and Comparative Example 2.
[FIG. 9] FIG. 9 is a table showing discharge characteristics of dry batteries of Example 7 and Comparative Example 2.
[FIG. 10] FIG. 10 is a table showing discharge characteristics of dry batteries of Example 8 and Comparative Example 2.

### DESCRIPTION OF EMBODIMENTS

Prior to the description of an embodiment, a study conducted by inventors of the present invention is described.

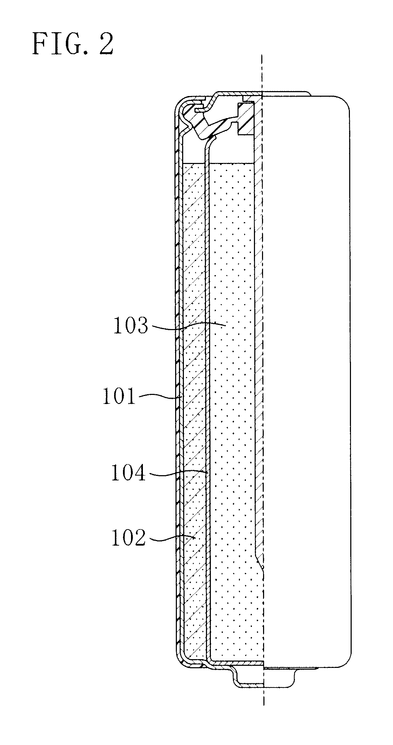

FIG. 2 illustrates a structure of an alkaline battery using zinc gel. In this structure, a negative electrode 103 made of zinc gel is disposed inside a hollow cylindrical positive electrode pellet 102 provided in a battery case 101 with a separator 104 interposed between the negative electrode 103 and the positive electrode pellet 102. Such an alkaline battery shows an insufficient degree of electrical connection/contact (i.e., a conductive network) between zinc power particles, and has a low ion conductivity in the gelled alkaline electrolyte. Thus, the technique of using a zinc porous body as a negative electrode as described above was proposed. An alkaline battery using a zinc porous body as a negative electrode is superior in high-rate discharge characteristics.

However, a study conducted by the inventors of the present invention shows that, in terms of continuity (liquid junction) of an electrolyte in a negative electrode, the liquid junction is broken by a tight bonding between zinc particles in the negative electrode of a zinc porous body (e.g., wool) proposed in PATENT DOCUMENT 1, and thus, continuity of the electrolyte is inferior to that in a conventional negative electrode using zinc powder. Accordingly, in the alkaline battery using the zinc porous body negative electrode, when a larger amount of the electrolyte is consumed in moderate- to low-rate discharge (i.e., at the end of discharge), the electrolyte in the negative electrode cannot smoothly move so that passivation (i.e., a sharp voltage drop in the battery) is likely to occur in the zinc surface in which the amount of the liquid is locally small.

The inventors of the present invention intensively studied to solve the newly found problem described above, to arrive at the present invention. An example embodiment of the present invention will be described hereinafter.

### (FIRST EMBODIMENT)

In an alkaline battery according to a first embodiment, a closed-end cylindrical battery case houses: a hollow cylindrical positive electrode; a negative electrode disposed in a hollow portion of the positive electrode; a separator sandwiched between the positive electrode and the negative electrode; and an alkaline electrolyte. The negative electrode is made of a zinc porous body made of a collection of zinc fibers. The alkaline electrolyte includes 0.05% to 0.5% by mass, both inclusive, of at least one of polyacrylate and polyacrylic acid with respect to the mass of zinc in the negative electrode.

Examples of polyacrylate of this embodiment include sodium polyacrylic acid. Each of polyacrylate and polyacrylic acid is a super absorbent polymer. If the amount of polyacrylate or polyacrylic acid is small, polyacrylate or polyacrylic acid can be dissolved in an alkaline electrolyte.

When an appropriate amount of at least one of polyacrylate and polyacrylic acid is included in the alkaline electrolyte as in the above-described structure, these polymers are adsorbed onto the zinc reaction surface with the alkaline electrolyte kept at the end of discharge to protect the reaction surface. Accordingly, when a larger amount of the electrolyte is consumed in moderate- to low-rate discharge (i.e., at the end of discharge), progress in passivation of the zinc surface can be reduced, and thus, high performance can be obtained.

When the amount of at least one of polyacrylate and polyacrylic acid added to the alkaline electrolyte is smaller than 0.05% by mass, an in sufficient amount of the alkaline electrolyte is kept at the end of discharge, and it is difficult to obtain sufficient advantages. When the amount of at least one of polyacrylate and polyacrylic acid added to the alkaline electrolyte is larger than 0.5% by mass, the ion conductivity in the electrolyte extremely decreases, and thus, discharge characteristics inevitably degrade. In view of these problems, the amount of at least one of polyacrylate and polyacrylic acid added to the alkaline electrolyte is in the range from 0.05% to 0.5% by mass, both inclusive, of zinc in the negative electrode.

The alkaline electrolyte of this embodiment is a potassium hydroxide aqueous solution, and preferably has a potassium hydroxide concentration higher than 40% by mass. In a conventional negative electrode using zinc gel, the potassium hydroxide concentration needs to be in the range from 30% to 40% by mass in order to obtain a sufficiently ion conductivity in the gelled electrolyte. The ion conductivity in the potassium hydroxide aqueous solution is at the maximum around a concentration of approximately 31 % by mass. In contrast, the negative electrode of this embodiment is made of a collection of zinc fibers, and a conductive network in the negative electrode is significantly enhanced. Accordingly, high overall performance can be obtained by increasing the solubility of zinc oxide as a substance generated as a result of discharge to set the potassium hydroxide concentration in the electrolyte at a high level at which passivation at the end of discharge is delayed, rather than by selecting a composition with which the ion conductivity approaches its maximum. In view of this, the potassium hydroxide concentration in the alkaline electrolyte is preferably higher than 40% by mass. The upper limit of the potassium hydroxide concentration depends on the solubility of potassium hydroxide in the alkaline electrolyte including various additives.

The alkaline electrolyte preferably includes 0.1% to 2% by mass, both inclusive, of lithium hydroxide with respect to the zinc mass. Although the precise mechanism is unknown, the presence of lithium hydroxide in the alkaline electrolyte tends to reduce the size of zinc oxide particles (needle crystal) in a substance generated as a result of discharge in the negative electrode, thereby delaying/reducing surface passivation. Accordingly, the function of the surfactant of the present invention can be further complemented, and thus, moderate- to low-rate discharge characteristics can be further improved. When the amount of added lithium hydroxide is 0.1% by mass or more of the zinc mass, sufficient advantages can be obtained. When the amount of added lithium hydroxide is 2% by mass or less of the zinc mass, a high ion conductivity in the alkaline electrolyte can be maintained, and satisfactory battery characteristics can be obtained.

The zinc porous body of this embodiment is preferably made of zinc having an average crystal grain size of 20 µm to 100 µm, both inclusive. The discharge (oxidation) of the zinc porous body progresses from the particle boundary (i.e., the interface between crystal grains) in the zinc surface, and thus, it is very important to control the crystal grain size to an appropriate value in order to improve discharge characteristics. When the crystal grain size is small, i.e., less than 20 µm, the initial electrode reactivity is high, but when oxidation in an outer portion of zinc crystal grains progresses at the end of discharge, crystal grains tend to be isolated in the electrode. Accordingly, it is difficult to utilize the capacity at the end of moderate- to low-rate discharge. On the other hand, when the zinc crystal grain size is larger than 100 µm, electrode reactivity is inferior to the initial electrode reactivity, and thus, total discharge characteristics including high-rate discharge characteristics tend to be poor. In view of this, the average crystal grain size of zinc metal is preferably in the range from 20 µm to 100 µm, both inclusive.

In the foregoing description, the average crystal grain size of zinc metal was measured by taking enlarged photographs of the surface of the zinc porous body with an optical microscope or an electron microscope, and calculating an average of the crystal grain sizes shown in the photographs. The measurement method will be described in detail below. This average crystal grain size can be controlled to be in an appropriate range by adjusting the speed of solidifying melted zinc during formation of the zinc porous body, or performing heat treatment on the zinc porous body.

The negative electrode is preferably formed by winding a zinc porous body sheet which is a zinc porous body in the shape of a sheet. To use a zinc porous body for a negative electrode of an alkaline battery, it is necessary to form the porous body in a tubular shape or a cylindrical shape. A possible method for achieving this formation is a method in which a predetermined amount of a zinc porous body is placed in a hollow portion of a tubular outer mold, and then the zinc porous body is press-molded directly with an inner mold of a piston type. However, in this method, burrs and whiskers of the zinc porous body enter a clearance between the outer mold and the inner mold, and troubles in manufacturing often occur. In view of actual manufacturing, a method in which a zinc porous body sheet in the shape of a flat plate is wound to obtain a tubular (cylindrical) negative electrode is advantageous in terms of cost, for example. With this method, discharge reaction (oxidation) of zinc in the alkaline battery progresses from an outer circumference of the negative electrode facing the positive electrode toward the center of the negative electrode. Thus, a current collector is preferably provided at the center to perform current collection of the negative electrode.

The zinc porous body sheet is preferably wound about a metal current collector pin made of metal and connected to the zinc porous body sheet by welding or soldering. The current collector pin is preferably located substantially at the center of the negative electrode in a cross section vertical to the central axis of the battery case. Since discharge reaction (oxidation) of zinc in the alkaline battery progresses from the outer circumference of the negative electrode facing the positive electrode toward the center of the negative electrode, it is appropriate to locate the position at which current collection of the negative electrode is performed substantially at the center of the negative electrode in a cross section vertical to the central axis of the battery case, in principle. To obtain such a configuration, a technique of connecting the metal current collector pin to an end of the zinc porous body sheet by welding or soldering, and winding the sheet about the pin (i.e., using the pin as the center of winding) is the easiest in terms of processes. As long as the position of the current collector pin is within a radius of 1 mm from the precise center, no serious problems arise.

The zinc porous body sheet employed in this case is preferably made of a collection of zinc fibers having a diameter of 50 µm to 500 µm, both inclusive, and a length of 10 mm to 300 mm, both inclusive. The zinc porous body sheet needs to have a mechanical strength sufficient for maintaining the shape as the negative electrode and a surface area sufficient for smooth discharge reaction. A configuration in which the diameter of the zinc fibers is 50 µm or more and the length of the zinc fibers is 10 mm or more can enable a mechanical strength sufficient for maintaining the shape of the negative electrode to be obtained. A configuration in which the diameter of the zinc fibers is 2000 µm or less, preferably 500 µm or less, and the length of the zinc fibers is 300 mm or less can ensure a surface area necessary for the reaction.

Zinc fibers as described above can be efficiently formed at low cost by melt spinning. Melt spinning is a general term of a technique of rapidly changing metal from a melted liquid into thin specimens. More specifically, melt spinning is classified into melt extrusion, in-rotating liquid spinning, melt stretching, and jet quenching, for example. A liquid is extruded from tiny holes in a nozzle into a cooling fluid in the melt extrusion, is injected into a rotating stream in the in-rotating liquid spinning, is discharged to gas or the air in the melt stretching, and is injected onto a rotating metal drum in the jet quenching, to be cooled, thereby forming metal fibers. At this time, metal fibers having a desired diameter and a desired length can be obtained by changing the nozzle size and spray conditions.

In this embodiment, the battery is preferably designed such that the mass ratio x/y of the alkaline electrolyte to zinc satisfies 1.0 ≤ x/y ≤1.5 where x [g] is the mass of the alkaline electrolyte included in the battery and y [g] is the mass of zinc included in the negative electrode. The ratio x/y is usually set to be less than 1.0 in a general alkaline battery including a gelled negative electrode using zinc powder. This is because a high proportion of the alkaline electrolyte might cause an insufficient degree of electrical connection/contact (i.e., a conductive network) between zinc power particles in the negative electrode, and separation or sedimentation of zinc powder particles. However, according to the present invention, the zinc negative electrode made of the porous body is employed, and thus, no such problems arise. The design of the battery satisfying a relationship of 1.0 ≤ x/y allows an electrolyte in an amount necessary for discharge reaction of the zinc negative electrode to be sufficiently supplied, thereby further increasing availability of the negative electrode. In addition, the design of the battery satisfying a relationship of x/y ≤ 1.5 enables a sufficient amount of the zinc material to be housed in the battery, thereby achieving a large capacity of the alkaline battery.

In addition, the capacity balance of the negative electrode / the positive electrode calculated under a condition in which MnO₂ included in the positive electrode has a theoretical capacity of 308 mAh/g and Zn included in the negative electrode has a theoretical capacity of 820 mAh/g, is preferably in the range from 0.9 to 1.1, both inclusive. In the case of an alkaline battery employing a general gelled negative electrode using zinc powder, the capacity balance of the negative electrode / the positive electrode is usually set to be larger than 1.1. This is because the availability of the gelled negative electrode is extremely lower than that of the positive electrode, and thus, the amount of the gelled negative electrode placed in the battery needs to be much larger than the theoretical value. In contrast, the availability of the negative electrode using the zinc porous body of this embodiment is higher than that of a conventional gelled negative electrode, and thus, the capacity balance of the negative electrode / the positive electrode can be set at 1.1 or less. Accordingly, a larger amount of a positive electrode material than a conventional material can be housed in the battery, thereby increasing the battery capacity. In addition, when the capacity balance of the negative electrode / the positive electrode is 0.9 or more, a sufficient amount of a zinc material can be housed in the battery, thereby also increasing the capacity of the alkaline battery.

### -Alkaline Battery-

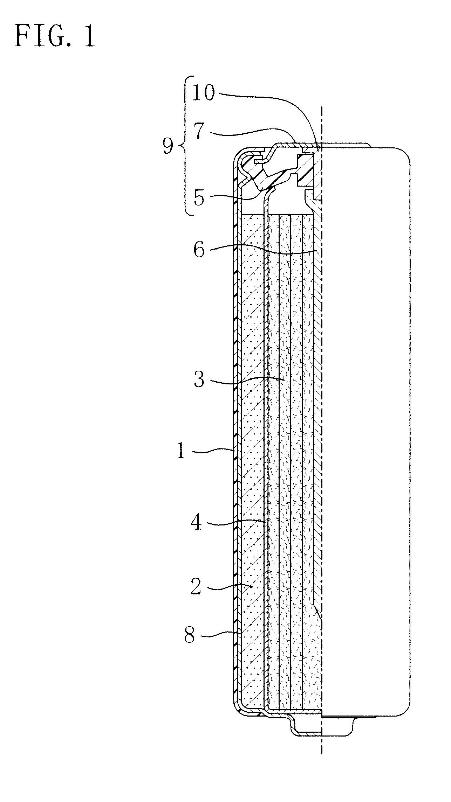

An alkaline battery according to the first embodiment will be described hereinafter with reference to FIG. 1

As illustrated in FIG. 1, the alkaline battery of the first embodiment includes a positive electrode made of hollow cylindrical positive electrode material mixture pellets 2 and a negative electrode 3 made of a zinc porous body sheet. The positive electrode material mixture pellets 2 are separated from the negative electrode 3 by a separator 4. A closed-end cylindrical battery case 8 is made of a nickel-coated steel plate. A graphite-coated film is formed in the battery case 8.

The alkaline battery shown in FIG. 1 can be fabricated in the following manner. First, a plurality of hollow cylindrical positive electrode material mixture pellets (i.e., a positive electrode) 2 including a positive electrode active material such as manganese dioxide are inserted in the battery case 8, and a pressure is applied to the pellets 2, thereby bringing the pellets 2 into close contact with the inner surface of the battery case 8.

Next, a cylindrically wound separator 4 and an insulating cap are inserted in the positive electrode material mixture pellets 2, and then an electrolyte is poured therein in order to moisten the separator 4 and the positive electrode material mixture pellets 2.

After the pouring, the negative electrode 3 is inserted in the separator 4, and the battery case 8 is filled with an alkaline electrolyte. The negative electrode 3 is formed by winding a porous body sheet of zinc as a negative electrode active material beforehand. The zinc porous body sheet is formed by compressing zinc fibers with a diameter of 50 µm to 500 µm, both inclusive, and a length of 10 mm to 300 mm, both inclusive. The alkaline electrolyte is made of a potassium hydroxide aqueous solution, and contains 0.05% to 0.5% by mass, both inclusive, of at least one of polyacrylate and polyacrylic acid with respect to the mass of zinc in the negative electrode, and as necessary, contains an indium compound, a bismuth compound, or a tin compound, for example.

The negative electrode 3 is in the shape of a cylinder, and a metal current collector pin 6 is placed on the central axis of the negative electrode 3. The top of the current collector pin 6 projects from the zinc porous body sheet, and is partially recessed downward. Before the insertion of the negative electrode 3 in the separator 4, a negative electrode junction part 10 is fitted into the recess of the current collector pin 6. The negative electrode junction part 10 is integrated with a resin sealing plate 5 and a bottom plate 7 also serving as a negative electrode terminal to form a negative electrode terminal structure 9. At this time, the negative electrode junction part 10 is fitted into the recess at the top of the current collector pin 6 to establish electrical connection between the current collector pin 6 and the bottom plate 7. When the entire negative electrode 3 is inserted in the separator 4, the negative electrode terminal structure 9 is inserted in an opening end portion of the battery case 8. Then, the opening end portion of the battery case 8 is crimped to the periphery of the bottom plate 7 with an end of the sealing plate 5 sandwiched therebetween, thereby bringing the edge of the opening of the battery case 8 into close contact with the bottom plate 7.

Lastly, the outer surface of the battery case 8 is coated with an external label 1. In this manner, the alkaline battery of this embodiment can be obtained.

Examples will be described in detail hereinafter. The present invention is not limited to the examples.

### EXAMPLES

### (Example 1)

### -Formation of Positive Electrode-

The positive electrode was fabricated in the following manner. Electrolytic manganese dioxide and graphite were mixed at a weight ratio of 94 : 6 to obtain mixture powder. Then, 100 parts by weight of this mixture powder was mixed with 1 part by weight of an electrolyte (i.e., 39% by weight of a potassium hydroxide aqueous solution containing 2% by weight of ZnO). The resultant mixture was uniformly stirred and mixed with a mixer, and was sized to have a uniform grain size. The obtained grain substance was press-formed into a positive electrode material mixture pellet with a hollow cylindrical mold. In the foregoing process, HH-TF produced by TOSOH CORPORATION was used as electrolytic manganese dioxide, and SP-20 produced by Nippon Graphite Industries, Ltd. was used as graphite.

### -Formation of Negative Electrode-

Zinc fibers (having an average diameter of 100 µm and an average length of 20 mm, and produced by AKAO ALUMINUM Co., Ltd.) obtained by melt spinning were compressed with a flat press, thereby forming a sheet of nonwoven fabric. This zinc fiber sheet was a zinc porous body sheet including spaces communicating with each other. Then, the zinc fiber sheet was cut into a rectangle with predetermined dimensions.

Thereafter, a current collector pin made of brass was soldered to one side of the rectangular zinc fiber sheet to be connected and fixed to this side. The soldering employed SnAgCu-based solder (with a melting point of 220°C).

Then, cross-linked polyacrylate water-absorbing polymer powder (DK-500 produced by Sanyo Chemical Industries, Ltd.) in an amount of 0.3% by mass of the zinc mass was spread over the zinc fiber sheet. Subsequently, the zinc fiber sheet was wound to form a roll with the current collector pin used as the central axis of the winding. At this winding, the surface over which the polymer powder was spread faced inward such that the polymer powder was included in the roll. In this manner, a negative electrode made of a zinc porous body substantially in the shape of a cylinder was formed. The current collector pin was located substantially on the central axis of the cylinder. The cylinder had a diameter smaller than the inner diameter of the positive electrode material mixture pellet by about 1 mm.

### -Assembly of Alkaline Battery-

The positive electrode material mixture pellets obtained in the manner described above were inserted to cover the inner wall of the battery case made of a nickel-plated steel plate, and then the separator was inserted in the battery case. As the separator, a composite nonwoven fabric made of vinylon and lyocell produced by KURARAY CO., LTD. was used.

Next, a negative electrode junction part of a negative electrode terminal structure was fitted into a recess formed in the top of the current collector pin connected to the negative electrode, thereby joining the negative electrode and the negative electrode terminal structure together.

Then, the cylindrical negative electrode was gradually inserted in the hollow portion of the positive electrode material mixture pellets to a substantially middle of the hollow portion in the length direction of the cylinder. At this time, the separator was interposed between the positive electrode and the negative electrode.

Thereafter, a predetermined amount of an alkaline electrolyte in which 2% by weight of ZnO is included in 41% by mass of a potassium hydroxide aqueous solution was poured into a region including the separator and the negative electrode using a slender tube such as an injection needle, and then the negative electrode was completely inserted into the hollow portion of the positive electrode material mixture pellets. Then, the bottom plate was crimped to the battery case. In this manner, an alkaline battery A 1 was fabricated.

In the same manner, an alkaline battery A2 was fabricated by using cross-linked polyacrylic acid powder (Junlon PW-150 produced by Nihon Junyaku Co., Ltd.) as polymer to be spread over the zinc fiber sheet, instead of the cross-linked polyacrylate water-absorbing polymer powder (DK-500 produced by Sanyo Chemical Industries, Ltd.). In the same manner, an alkaline battery A3 was also fabricated by using the identical amounts of DK-500 and PW-150 as polymer such that the total amount of DK-500 and PW-150 was 0.3% by mass of the zinc mass.

### (Comparative Example 1)

A dry battery Y according to Comparative Example 1 was fabricated in the same manner as the alkaline battery of Example 1, except that no polyacrylic acid-based polymer was added to the alkaline electrolyte. That is, the alkaline electrolyte of the dry battery Y contains none of polyacrylate and polyacrylic acid.

### (Comparative Example 2)

A dry battery Z according to Comparative Example 2 was fabricated using a negative electrode in which zinc powder was dispersed in a conventional gelled alkaline electrolyte. As the gelled alkaline electrolyte, a mixture of 54 parts by weight of 33% by weight of a potassium hydroxide aqueous solution (containing 2% by weight of ZnO), 0.7 parts by weight of cross-linked polyacrylic acid, and 1.4 parts by weight of cross-linked sodium polyacrylic acid, was used, and the mass of zinc and the mass of the alkaline electrolyte in the battery were the same as those in Example 1. Except for these aspects, the dry battery Z was fabricated in the same manner as in Example 1. The total amount of added cross-linked polyacrylic acid and cross-linked sodium polyacrylic acid was 2.1% by mass of zinc in the negative electrode of the dry battery Z.

### -Evaluation of Discharge Characteristics-

### (1) Evaluation of Low-rate Discharge Characteristics

The dry battery fabricated in the manner described above was discharged in a constant-temperature atmosphere of 21°C at a constant current of 100 mA for one hour per day. In this discharge, the total discharge duration before the battery voltage reached 0.9 V was measured. As the discharge duration increases, low-rate discharge characteristics are determined to be improved.

### (2) Evaluation of Moderate-rate Discharge Characteristics

The dry battery fabricated in the manner described above was discharged in a constant-temperature atmosphere of 21°C at a constant current of 250 mA for one hour per day. In this discharge, the total discharge duration before the battery voltage reached 0.9 V was measured. As the discharge duration increases, moderate-rate discharge characteristics are determined to be improved.

### (3) Evaluation of High-rate Pulse Discharge Characteristics

The dry battery fabricated in the manner described above was subjected to 10 cycles of the following process (pulse discharge) per hour. In each of the cycles, in a constant-temperature atmosphere of 21°C, the battery was discharged at 1.5 W for two seconds and then discharged at 0.65 W for 28 seconds. In this pulse discharge, the time before the closed circuit voltage reached 1.05 V was measured. This evaluation conformed to a discharge test defined by ANSI C18.1M.

Each of Evaluations (1), (2), and (3) was performed using the dry battery Z of Comparative Example 2 as a reference, and the measured value of the dry battery Z was assumed to be 100 in the evaluation.

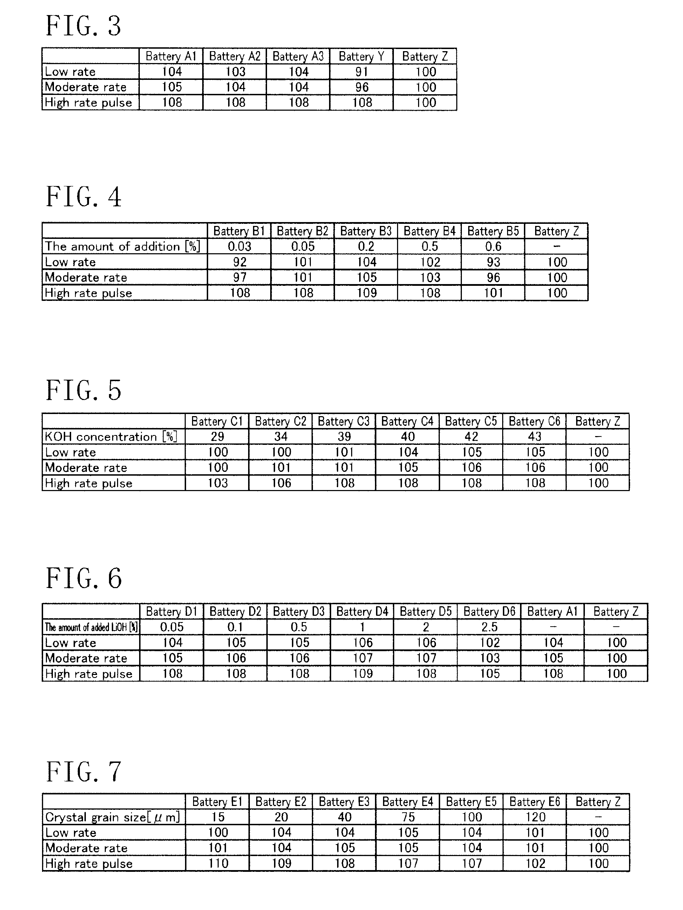

Evaluation results of the alkaline batteries of Example 1 and Comparative Examples 1 and 2 are shown in FIG. 3. The dry battery Y of Comparative Example 1 using the zinc porous body as the negative electrode had high-rate discharge characteristics superior to those of the dry battery Z of Comparative Example 2 using zinc gel as the negative electrode, but had low- and moderate-rate discharge characteristics inferior to those of the dry battery Z. On the other hand, the alkaline batteries A1, A2, and A3 of Example 1 each using the zinc porous body as the negative electrode and adding at least one of polyacrylate and polyacrylic acid to the alkaline electrolyte had high-rate discharge characteristics superior to those of the dry battery Z, and also had low- and moderate-rate discharge characteristics superior to those of the dry battery Z. This is because the use of the zinc porous body as the negative electrode improves high-rate discharge characteristics and the addition of at least one of polyacrylate and polyacrylic acid to the alkaline electrolyte improves low- and moderate-rate discharge characteristics.

### (Example 2 and Comparative Example 3)

Dry batteries according to Example 2 and Comparative Example 3 were fabricated in the same manner as in Example 1, except that the amount of polyacrylate added to the alkaline electrolyte in the alkaline battery A1 of Example 1 was changed. FIG. 4 shows evaluation results of discharge characteristics of dry batteries B2-B4 of Example 2 and dry batteries B1 and B5 of Comparative Example 3.

The dry battery B1 including a small amount of added polyacrylate had discharge characteristics relatively similar to those of the dry battery Y of Comparative Example 1, and had moderate- and low-rate characteristics of the dry battery B 1 were not improved. The dry battery B5 including an excessively large amount of added polyacrylate had low- and moderate-rate discharge characteristics inferior to those of the dry battery Z of Comparative Example 2, and had high-rate discharge characteristics substantially the same as those of the dry battery Z. In contract, each of the dry batteries B2-B4 had significantly improved high-rate discharge characteristics, and had improved moderate- and low-rate discharge characteristics.

### (Example 3)

Dry batteries according to Example 3 were fabricated in the same manner as the dry battery A1 of Example 1, except that the potassium hydroxide concentration in the alkaline electrolyte in the dry battery A1 was changed. FIG. 5 shows evaluation results of discharge characteristics of the dry batteries C1-C6 of Example 3.

Each of the dry batteries C4-C6 had a potassium hydroxide concentration of 40% or more, had significantly improved high-rate discharge characteristics, and also had improved moderate- and low-rate discharge characteristics, as compared to the dry battery Z. The dry batteries C1-C3 had high-rate discharge characteristics superior to those of the dry battery Z, and had low- and moderate-rate discharge characteristics substantially the same or slightly superior to those of the dry battery Z.

### (Example 4)

Dry batteries according to Example 4 were fabricated in the same manner as the dry battery A1 of Example 1, except that lithium hydroxide (LiOH) was additionally added to the alkaline electrolyte in the dry battery A1.

FIG. 6 shows evaluation results of discharge characteristics of dry batteries D1-D6 according to this Example. The amount of added LiOH is expressed by weight percentage with respect to zinc in the negative electrode.

In the dry batteries D2-D5, discharge characteristics were improved as compared to the dry battery A1. On the other hand, the dry battery D1 including a small amount of added LiOH had discharge characteristics which are the same as those of the dry battery A1. On the other hand, the dry battery D6 including a large amount of added LiOH had discharge characteristics slightly inferior to those of the dry battery A1. This is considered to be because an excessive addition of LiOH reduces the ion conductivity in the alkaline electrolyte. However, discharge characteristics of the dry battery D6 were superior to those of the dry battery Z of Comparative Example 2.

### (Example 5)

Dry batteries according to Example 5 were fabricated in the same manner as the dry battery A of Example 1, except that the crystal grain size of zinc forming the zinc fiber sheet in the dry battery A1 was changed to various values. The crystal grain size was adjusted by changing the temperature of melted zinc or the temperature of a spray atmosphere in forming zinc fibers by melt spinning, or by annealing zinc fibers in an Ar-gas atmosphere. The diameter and length of the zinc fibers were equal to those of the zinc fibers used in the dry battery A.

The crystal grain size of zinc was measured using micrographs. Specifically, enlarged photographs of the surface of the zinc fiber sheet were taken with an optical microscope, and the crystal grain sizes shown in the photographs were measured. The magnification of the microscope was adjusted such that several tens or more of regions enclosed by particle boundaries were included in each of the photographs. Then, a plurality of lines were arbitrarily drawn on the micrograph, and a line crossing ten or more particle boundaries was selected. Thereafter, in successive ten particle boundaries, the distance from an intersection of the selected line and the first particle boundary to an intersection of the selected line and the tenth particle boundary was measured. The obtained distance was divided by nine, thereby obtaining a value r. Subsequently, two or more such lines as described above were additionally selected in the same manner to obtain values r. The average of these values r was defined as the crystal grain size of zinc metal forming the zinc fiber sheet.

The range in which the average crystal grain size of zinc was changed is shown in FIG. 7. FIG. 7 shows evaluation results of discharge characteristics of the dry batteries E1-E6 of Example 5.

A comparison with the dry battery Z of Comparative Example 2 shows that the dry batteries E1-E6 had improved discharge characteristics, and in particular, batteries showing the average crystal grain size of 20 µm to 100 µm, both inclusive, had improved discharge characteristics.

### (Example 6)

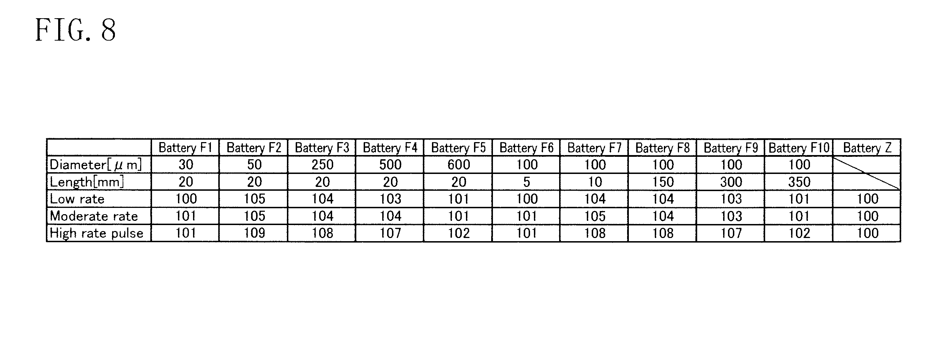

Dry batteries according to Example 6 were fabricated in the same manner as the dry battery A1 of Example 1, except that the diameter or the length of the zinc fibers in the dry battery A1 was changed. The range in which the diameter or the length of the zinc fibers was changed is shown in FIG. 8. FIG. 8 shows evaluation results of discharge characteristics of the dry batteries F1-F10 of Example 6.

A comparison with the dry battery Z of Comparative Example 2 shows that the dry batteries F1-F10 had improved discharge characteristics, and in particular, batteries with a zinc-fiber diameter of 50 µm to 500 µm, both inclusive, had improved discharge characteristics, and batteries with a zinc-fiber length of 10 mm to 300 mm, both inclusive, had improved discharge characteristics.

### (Example 7)

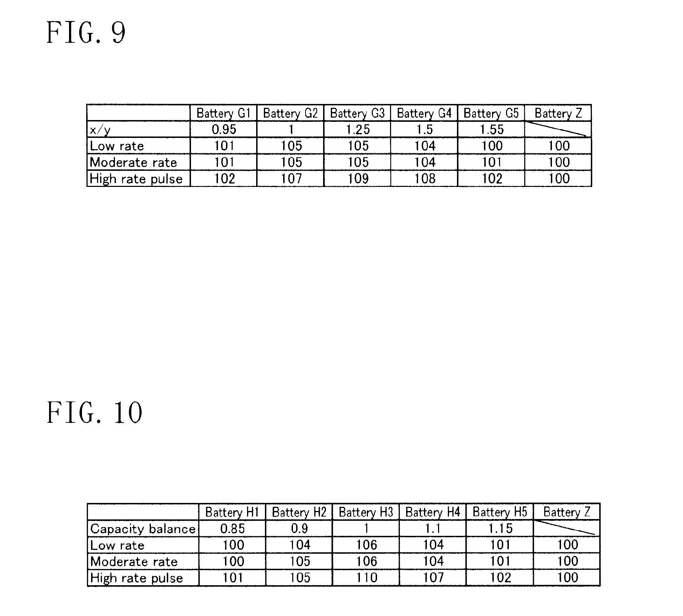

Dry batteries of Example 7 were fabricated in the same manner as the dry battery A1 of Example 1, except that the mass x [g] of the alkaline electrolyte and the mass y [g] of zinc contained in the negative electrode in one dry battery A1 were changed under a condition in which a value of x + y was constant. The ranges in which the masses x and y were respectively changed are shown in FIG. 9, and are expressed as x/y. FIG. 9 shows evaluation results of discharge characteristics of the dry batteries G1-G5 of Example 7.

A comparison with the dry battery Z of Comparative Example 2 shows that the dry batteries G1-G5 had improved discharge characteristics, and in particular, batteries satisfying the relationship of 1 ≤ x/y ≤ 1.5 had improved discharge characteristics.

### (Example 8)

Dry batteries according to Example 8 were fabricated in the same manner as the dry battery A1 of Example 1, except that the amount of the positive electrode and the amount of the negative electrode in each dry battery A1 were changed under a condition in which the sum of these amounts was constant. With respect to the amounts of the positive electrode and the negative electrode, the change was performed using, as an index, the capacity balance of the negative electrode / the positive electrode calculated under a condition in which MnO₂ included in the positive electrode had a theoretical capacity of 308 mAh/g and Zn included in the negative electrode had a theoretical capacity of 820 mAh/g. The amount of the positive electrode and the amount of the negative electrode were changed in the range shown in FIG. 10 in terms of the capacity balance of the negative electrode / the positive electrode. FIG. 10 shows evaluation results of the dry batteries H1-H5 of Example 8.

As compared to the dry battery Z of Comparative Example 2 having a capacity balance of the negative electrode / the positive electrode greater than 1.1, the dry batteries G1-G5 had improved discharge characteristics, and in particular, the dry batteries each having a capacity balance of 0.9 to 1.1, both inclusive, had improved discharge characteristics.

### (Other Embodiments)

The foregoing embodiments and examples have been set forth merely for the purpose of preferred examples, and the present invention is not limited to these examples. For example, some of the examples may be combined. For example, Examples 2 and 4 may be combined, or Examples 5 and 6 may be combined. Further, other examples may be combined in other ways.

The method for fixing the current collector pin to the zinc fiber sheet is not limited to soldering, and may be welding or a combination of soldering and welding.

In the examples, the zinc fiber sheet is made of pure zinc. Alternatively, in terms of anti-corrosion, the zinc fiber sheet may be made of a zinc alloy containing a small amount of an element such as indium, bismuth, aluminium, calcium, or magnesium.

Polyacrylate and polyacrylic acid described above are not limited to the types described in the examples, and are not necessarily of a cross-linked type. Only polyacrylic acid may be added to the electrolyte.

### INDUSTRIAL APPLICABILITY

The present invention can provide an alkaline battery which is superior not only in high-rate discharge characteristics, but also in moderate- to low-rate discharge characteristics, and thus, is useful for, for example, portable AV equipment or electronic game machines.

### DESCRIPTION OF REFERENCE CHARACTERS

- 1: external label
- 2: positive electrode material mixture pellet
- 3: negative electrode
- 4: separator
- 5: resin sealing plate
- 6: current collector pin
- 7: bottom plate
- 8: battery case
- 9: negative electrode terminal structure
- 10: negative electrode junction part

## Claims

1. An alkaline battery, comprising a closed-end cylindrical battery case housing a hollow cylindrical positive electrode, a negative electrode disposed in a hollow portion of the positive electrode, a separator sandwiched between the positive electrode and the negative electrode, and an alkaline electrolyte, wherein
the negative electrode is made of a zinc porous body made of a collection of zinc fibers, and
the alkaline electrolyte includes 0.05% to 0.5% by mass, both inclusive, of at least one of polyacrylate and polyacrylic acid with respect to a mass of zinc in the negative electrode.

2. The alkaline battery of claim 1, wherein the alkaline electrolyte is a potassium hydroxide aqueous solution having a concentration of 40% by mass or more.

3. The alkaline battery of claim 1 or 2, wherein the alkaline electrolyte further includes 0.1% to 2% by mass, both inclusive, of lithium hydroxide with respect to the mass of zinc in the negative electrode.

4. The alkaline battery of one of claims 1 to 3, wherein zinc forming the zinc porous body has an average crystal grain size of 20 µm to 100 µm, both inclusive.

5. The alkaline battery of one of claims 1 to 4, wherein the zinc fibers have a diameter of 50 µm to 500 µm, both inclusive, and a length of 10 mm to 300 mm, both inclusive.

6. The alkaline battery of one of claims 1 to 5, wherein the zinc fibers are formed by melt spinning.

7. The alkaline battery of one of claims 1 to 6, wherein the negative electrode is formed by winding the zinc porous body in the shape of a sheet.

8. The alkaline battery of claim 7, wherein a zinc porous body sheet which is the zinc porous body in the shape of a sheet, is wound about a current collector pin made of a metal and connected to the zinc porous body sheet by at least one of welding and soldering, and
the current collector pin is located substantially at a center of the negative electrode in a cross section vertical to a central axis of the battery case.

9. The alkaline battery of one of claims 1 to 8, wherein the alkaline battery satisfies a relationship of 1.0 < x/y < 1.5 where x [g] is a mass of the alkaline electrolyte and y [g] is a mass of zinc included in the negative electrode.

10. The alkaline battery of one of claims 1 to 9, wherein a capacity balance of the negative electrode / the positive electrode calculated under a condition in which MnO₂ included in the positive electrode has a theoretical capacity of 308 mAh/g and Zn included in the negative electrode has a theoretical capacity of 820 mAh/g, is in the range from 0.9 to 1.1, both inclusive.
